# EUROPÄISCHE PATENTSCHRIFT

(11) **EP 2 260 818 B1**
(45) Veröffentlichungstag und Bekanntmachung des Hinweises auf die Patenterteilung: **28.03.2012**
(21) Anmeldenummer: 10001813.4
(22) Anmeldetag: 23.02.2010
(51) Int. Cl.: A61G 3/06, B60P 1/44

(54) **Ladelift**
Load lift
Levage de charge

(30) Priorität: 23.02.2009 DE 202009002451 U
(43) Veröffentlichungstag der Anmeldung: 15.12.2010
(73) Patentinhaber: Kollewe, Dieter, 35066 Frankenberg (DE)
(72) Erfinder: Kollewe, Dieter, 35066 Frankenberg (DE)
(74) Vertreter: Schwarz, Diethelm

(56) Entgegenhaltungen:
- EP-A1- 0 140 742
- DE-U1- 9 320 036
- US-A- 3 913 759
- US-A- 4 027 807
- US-A1- 2005 220 584
- US-A1- 2007 020 076

## Beschreibung

Die Erfindung betrifft einen Ladelift der im Oberbegriff des Anspruchs 1 angegebenen Gattung und ein damit ausgerüstetes Kraftfahrzeug gemäß Anspruch 15.

Ladelifte dieser Art dienen zur Erleichterung des Einladens von Ladegut insbesondere in den Laderaum eines Personenkraftwagens, Kombifahrzeugs oder auch Klein-Lastkraftwagens. Hierzu wird ein im Fahrzeug gelagertes, in der Regel als Plattform ausgebildetes Ladeelement nach rückwärts oder zur Seite hin aus dem Laderaum herausgefahren, auf dem Erdboden abgesetzt, beladen und danach wieder zunächst auf die Höhe der Ladefläche des Laderaums angehoben. Danach wird das Ladegut entweder vom Ladeelement manuell auf die Ladefläche überführt oder zusammen mit dem Ladeelement in den Koffer- oder Laderaum des Kraftfahrzeugs befördert. Als Ladegut kommen insbesondere schwere Lasten wie z. B. Rollstühle aller Art, Rollwagen, Paletten od. dgl., aber auch z. B. Spezialwaren wie Pumpen oder anderes Zubehör von Feuerwehr- oder Notarztwagen in Betracht.

Ladelifte der eingangs bezeichneten Gattung sind in vielen Varianten bekannt. Ein bekannter Ladelift weist z. B. ein im Fahrzeug zu befestigendes Haltegestell in Form eines mit Lauf- bzw. Führungsschienen versehenen Rahmens, einen verschiebbar auf diesem Rahmen geführten Laufwagen und eine am Laufwagen befestigte Ladevorrichtung auf, die eine Hubvorrichtung und eine an dieser befestigte Ladeplattform enthält (DE 20 2004 005 632 U1, DE 20 2007 010 020 U1, EP 0 329 697 B1). Die Hubeinrichtung enthält eine Doppelschwinge, eine Parallelogrammführung oder einen Schwenkmechanismus, wodurch der Ladelift insgesamt im Hinblick auf die Konstruktion und die mit dieser verbundenen Kosten sehr aufwändig ist. Andere bekannte Ladelifte sind mit ähnlichen Parallelogrammführungen versehen (z. B. DE 203 09 868 U1). Konstruktiv einfacher sind demgegenüber Hubeinrichtungen, die eine Ladeplattform mit Hilfe von Linearführungen auf- und abbewegen können (z. B. DE 93 20 036 U1, DE 299 13 723 U1, EP 1 145 901 A1). Diese Ladelifte weisen unabhängig davon, dass sie meistens ebenfalls konstruktiv aufwändig ausgebildet sind, andere Mängel auf. Außerdem ist allen genannten Ladeliften gemeinsam, dass sie nur schwer in ein Kraftfahrzeug einbaubar oder aus diesem ausbaubar sind oder gar dem Zweck dienen, permanent im Kraftfahrzeug zu verbleiben. Letzteres ist unerwünscht, weil Ladelifte der beschriebenen Art ein nicht unbeträchtliches Gewicht haben (z. B. ca. 100 kg und mehr), wodurch das Leergewicht des Kraftfahrzeugs erheblich erhöht bzw. die mögliche Zuladung entsprechend reduziert würde. Demgegenüber wird es aus Gründen des ersten Einbaus, des Versands, der Wartung und der Reparatur für günstiger gehalten, einen Ladelift zur Verfügung zu stellen, der leicht ein- und ausbaubar ist und in einzelne Komponenten zerlegt werden kann.

Die US 2005/0220584 A1 beschreibt ein Liftsystem mit einem aus Hebearmen und einem Windenarm gebildeten Laufwagen, der an Fahrzeuginnenwänden im Bereich einer Ladefläche montierten und entsprechend der Breite des Laufwagens beabstandeten Führungen hin- und herbewegbar ist. Eine Ladeplattform ist mit Hilfe von Seilen oder Bändern an dem Laufwagen montierbar. Nachteilig ist, dass der Laufwagen der Fahrzeugbreite angepasst sein muss, da die diesen aufnehmenden Führungen gemäß der Breite der Ladefläche beabstandet sind. Auch eine Ladeplattform einer in der US 2007/0020076 A1 offenbarten Ladevorrichtung wird über an einem Kraftfahrzeug einzeln befestigten, ausziehbaren Führungsschienen in die jeweilige Be- oder Entladeposition gebracht. Die Höhe der Ladeplattform kann dazu mit Hilfe von Gurten gegenüber den Führungsschienen verändert werden.

Ferner finden Ladelifte der eingangs beschriebenen Gattung Verwendung zur Überbrückung von Höhenunterschieden beim Transport von Gütern in Gebäuden etwa an Laderampen. Auch gibt es Ladelifte, die bei Verkehrsmitteln wie etwa der Eisenbahn beim Ein- und Aussteigen als Hilfsmittel für Behinderte eingesetzt werden. Ferner sind Lifte für Geh-Behinderte oder Rollstuhlfahrer zur Überbrückung von Stufen oder Treppen in Gebäuden bekannt. Diese werden dort eingesetzt, wo die Baukonstruktionen eine Installation von Treppenliftern nicht erlauben oder aber deren Einbau im Verhältnis zu dem zu überwindenden Höhenunterschied zu aufwendig ist. Die eingesetzten Lifte sind umständlich in der Handhabung und nur unter großem Aufwand zu installieren bzw. zu deinstallieren. Das ist insbesondere dann nachteilig, wenn die baulichen Raumverhältnisse keine permanente Installation dieser Lifte erlauben.

Ausgehend davon liegt der Erfindung das technische Problem zugrunde, den Ladelift der eingangs bezeichneten Gattung so auszubilden, dass er einfach ausgebildet ist, auch von Nichtfachleuten am Einsatzort leicht ein- und ausgebaut bzw. installiert und bedient werden kann und service- und wartungsfreundlich ist.

Zur Lösung dieses Problems dienen die kennzeichnenden Merkmale des Anspruchs 1.

Der erfindungsgemäße Ladelift ist modulartig aus einem Haltegestell, einem daran bewegbaren Laufwagen und einer an dem Laufwagen montierbaren Ladevorrichtung aufgebaut. Die einzeln handhabbaren Module sind mittels senkrecht zueinander vorgesehenen Führungen miteinander verbindbar. Der erfindungsgemäße Ladelift ist zum Einsatz in einem Fahrzeug, wie einem Schiff, einem Flugzeug oder einem Kraftfahrzeug vorgesehen sein. Ferner umfasst die Erfindung auch einen stationär in einem Gebäude zur Überwindung von Höhenunterschieden etwa an Stufen oder Treppen beim Transport von Gütern oder behinderten Personen vorgesehenen Ladelift. Auch ist der erfindungsgemäße Ladelift an Laderampen für Lastkraftwagen, an Kais für Schiffe oder bei einer Beladung von Flugzeugen einsetzbar. Ferner ist der erfindungsgemäße Ladelift auch zum Einsatz an Ein- bzw. Ausstiegszonen von Verkehrsmitteln wie Eisenbahn-, Schnellbahn- oder Untergrundbahnwaggons bestimmt.

Die Erfindung bringt vor allem den Vorteil mit sich, dass der Ladelift drei als komplette Module ausgebildete Hauptbestandteile aufweist, die leicht zusammengesetzt und daher auch wieder leicht demontiert werden können. Dadurch müssen weder der Einbau noch die Wartung und/oder Reparatur in Spezialwerkstätten erfolgen. Durch einen solchen teleskopartigen Aufbau wird eine Ladeplattform der Ladevorrichtung nicht durch Torsionskräfte sondern lediglich durch Biegekräfte belastet. Außerdem wird die Lagerhaltung wesentlich vereinfacht. Da das Gewicht eines einzelnen Moduls nur ca. 30 kg bis 40 kg betragen braucht, kann die Handhabung des Ladelifts bzw. seiner Module ohne Zuhilfenahme von Kränen, Gabelstaplern od. dgl. leicht von einer einzigen Person durchgeführt werden. Dies ermöglicht es, das Kraftfahrzeug ohne aufwändige Montage-und Demontagearbeiten wahlweise mit oder ohne Ladelift zu verwenden. Werden zur Befestigung des Haltegestell-Moduls im Fahrzeug an sich bekannte Schnellverschlüsse vorgesehen, vorzugsweise solche, die an ohnehin modernen Kraftfahrzeugen vorhandenen Haltepunkten befestigt werden können, dann wird der Ladelift außerdem im Sinne der Straßenverkehrsoidnung nicht als fester Einbau, sondern als Ladegut betrachtet, so dass keine TÜV-Abnahme und keine Einträge in die Fahrzeugpapiere erforderlich sind. Das gilt unabhängig davon, ob der erfindungsgemäße Ladelift in einen Personenkraftwagen oder einen Lastkraftwagen eingebaut wird.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen eines zum Einsatz in einem Kraftfahrzeug bestimmten Ladelifts näher erläutert. Es zeigen:
Fig. 1 a,b schematisch in einer perspektivischen und auseinander gezogenen Darstellung ein erstes Ausführungsbeispiel eines erfindungsgemäßen Ladelifts;
Fig. 2 eine vergrößerte Vorderansicht eines mit Laufrollen versehenen Winkelelements eines Haltegestells des Ladelifts nach Fig. 1a,b;
Fig. 3 eine Draufsicht auf das Winkelelement nach Fig. 2;
Fig. 4 und 5 den Fig. 2 und 3 entsprechende Ansichten eines weiteren Winkelelements des Haltegestells des Ladelifts nach Fig. 1a,b;
Fig. 6a,b eine perspektivische Ansicht des Ladelifts nach Fig. 1a,b in einem zu einer gebrauchsfertigen Baueinheit zusammengesetzten Zustands;
Fig. 7 eine Seitenansicht des Winkelelements nach Fig. 2 von links her und einer diesem zugeordneten Laufschiene eines Laufwagens des Ladelifts nach Fig. 1a,b und 6a,b;
Fig. 8 eine der Fig. 7 entsprechende Seitenansicht des Winkelelements nach Fig. 4 und einer diesem zugeordneten Laufschiene des Laufwagens des Ladelifts nach Fig. 1a und 6a;
Fig. 9 bis 11 je eine Seitenansicht, Draufsicht und vergrößerte Rückansicht eines Klein-Lastkraftwagens mit einem eingebauten und in einen Laderaum zurückgezogenen Ladelift nach einem zweiten Ausführungsbeispiel der Erfindung;
Fig. 12 schematisch eine vergrößerte, zur Hin- und Herbewegung eines Laufwagen-Moduls des Ladelifts nach Fig. 9 bis 11 vorgesehene Anordnung von Laufschienen;
Fig. 13 bis 15 den Fig. 9 bis 11 entsprechende Darstellungen des Klein-Lastkraftwagens in einer Ladestellung des Ladelifts;
Fig. 16 und 17 den Fig. 2 und 4 ähnliche Ansichten einer Laufschienen-Anordnung des Ladelifts nach Fig. 9 bis 15; und
Fig. 18 bis 23 einen zur Befestigung des Ladelifts in einem Kraftfahrzeug geeigneten Schnellverschluss, wobei Fig. 18 bis 20 je eine Vorderansicht, Draufsicht und Seitenansicht einer Montageschiene und Fig. 21 bis 23 je eine Seitenansicht, Draufsicht und Seitenansicht eines der Montageschiene zugeordneten Verschlusselements zeigen.

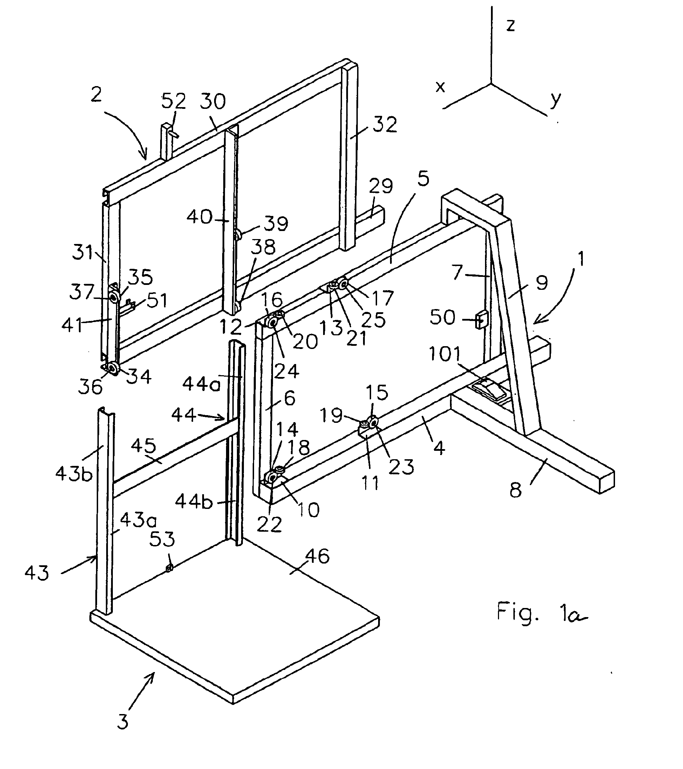

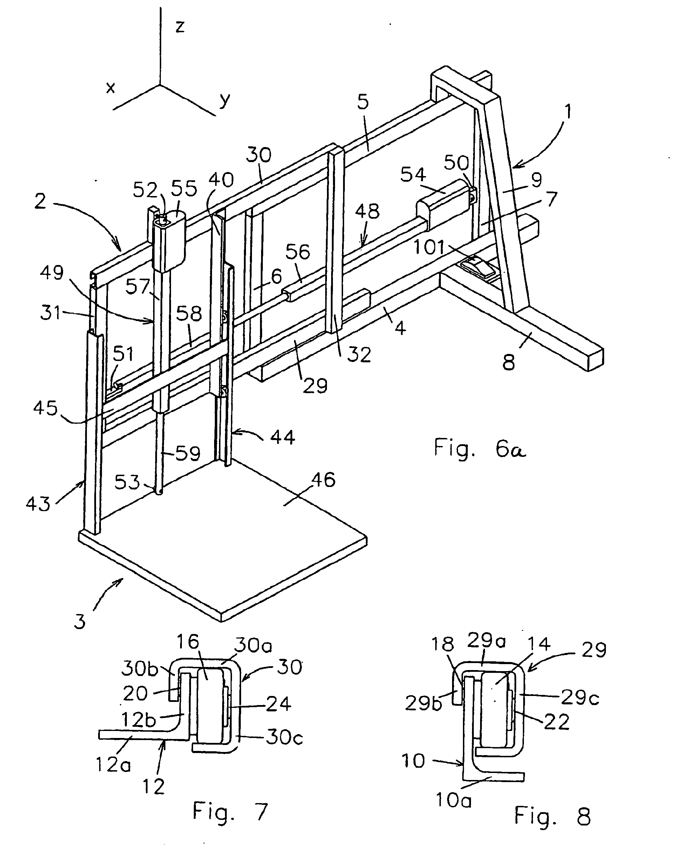

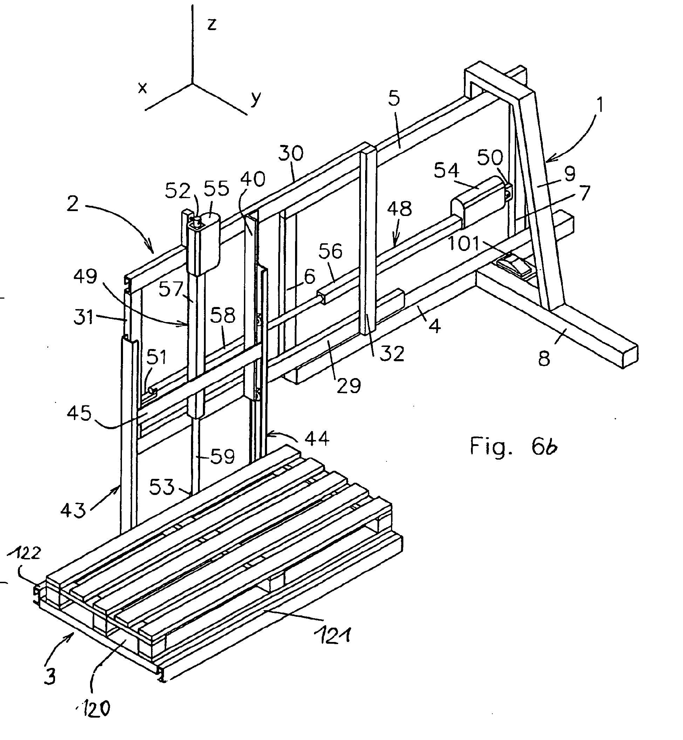

Nach Fig. 1a enthält ein erfindungsgemäßer Ladelift ein Haltegestell 1, einen Laufwagen 2 und eine Ladevorrichtung 3. Jedes dieser drei Teile besteht aus einem vorzugsweise komplett vormontierten Modul, der als Ganzes handhabbar ist. Jedes Modul kann daher einzeln gelagert, gewartet oder repariert werden. Alternativ ist es möglich, die drei Module in der aus Fig. 6 ersichtlichen Weise zu einer gebrauchsfertigen Baueinheit zusammenzusetzen, wie weiter unten näher erläutert ist.

Das Haltegestell 1 enthält zwei vorzugsweise gerade ausgebildete Längsträger 4 und 5 und zwei entsprechende, vorzugsweise senkrecht zu diesem angeordnete und sie verbindende Querträger 6 und 7. Die Träger 4 bis 7 bestehen z. B. aus biegesteifen Vierkantrohren und sind zu einem rechteckfönnigen Rahmen miteinander verbunden, wobei Längsachsen der Längsträger 4 und 5 parallel zueinander und parallel zur x-Achse eines gedachten Koordinatensystems und Längsachsen der Querträger 6 und 7 parallel zueinander und parallel zur z-Achse des gedachten Koordinatensystems angeordnet sind. An einem seitlichen Ende ist der Rahmen an einer Unterkonstruktion befestigt, die einen mit dem Träger 4 verbundenen Fuß 8 mit einer vorzugsweise parallel zur y-Achse des Koordinatensystems angeordneten Längsachse und eine von diesem aufragende, mit dem Längsträger 5 verbundene Stütze 9 aufweist. Aufgrund dieser Anordnung bildet der Rahmen mit den vier Trägern 4 bis 7 einen seitlich von der Unterkonstruktion abstehenden Tragarm, wobei der Fuß 8 und die Stütze 9 vorzugsweise in einer parallel zur yz-Ebene und damit senkrecht zur Rahmenebene angeordneten Ebene liegen, die hier parallel zur xz-Ebene des gedachten Koordinatensystems angeordnet ist.

An den Längsträgern 4 und 5 sind je zwei Winkelstücke 10 bis 13 befestigt, wobei die Winkelstücke 10, 12 an von der Stütze 9 entfernten Enden und die Winkelstücke 11, 13 in mittleren Bereichen der Längsträger 4, 5 angeordnet sind. Die Winkelstücke 10 bis 13 tragen je eine erste, drehbar gelagerte Laufrolle 14 bis 17 mit einem hier vergleichsweise großen Durchmesser sowie eine zweite, drehbar gelagerte Laufrolle 18 bis 21 mit einem hier vergleichsweise kleinen Durchmesser. Die Drehachse der ersten Laufrollen 14 bis 17 stehen im Ausführungsbeispiel jeweils parallel zur y-Achse und die Drehachsen der zweiten Laufrollen 18 bis 21 jeweils parallel zur z-Achse des gedachten Koordinatensystems. Außerdem sind die ersten Laufrollen 14 bis 17 als Kombinationsrollen ausgebildet und mit einer zentralen Aussparung versehen, in der je eine dritte Laufrolle 22 bis 25 mit vergleichsweise kleinem Durchmesser drehbar gelagert ist, deren Drehachsen im eingebauten Zustand parallel zur z-Achse angeordnet sind.

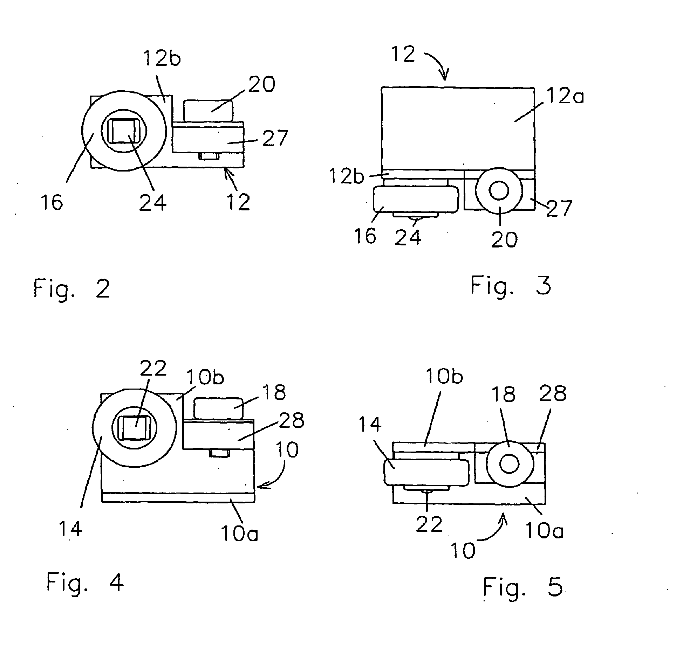

Wie genauer aus Fig. 2 und 3 ersichtlich ist, weist das Winkelstück 12 zwei senkrecht zueinander stehende Schenkel 12a, 12b auf, wobei der Schenkel 12a auf der Oberseite des Längsträgers 5 befestigt wird, während der senkrecht davon aufragende Schenkel 12b die erste und die dritte Laufrolle 16, 24 trägt. In x-Richtung direkt daneben ist ein Vierkantstück 27 vorgesehen, das unmittelbar auf der Oberseite des Längsträgers 5 oder in einer Aussparung des Schenkels 12b am Winkelstück 12 befestigt ist und die zweite Laufrolle 20 trägt. In entsprechender Weise weist, wie Fig. 4 und 5 zeigen, das Winkelstück 10 zwei Schenkel 10a, 10b auf, wobei der Schenkel 10a auf der Oberseite des Längsträgers 4 befestigt wird, während der senkrecht davon aufragende Schenkel 10b die erste und die dritte Laufrolle 14, 22 trägt. In x-Richtung direkt daneben ist ein Vierkantstück 28 vorgesehen, das unmittelbar auf der Oberseite des Längsträgers 4 oder in einer Aussparung des Schenkels 10b am Winkelstück 10 befestigt ist und die Laufrolle 18 trägt. Die Winkelstücke 11 und 13 sind entsprechend ausgebildet und mit den Laufrollen 15, 19, 23 bzw. 17, 21, 25 versehen, wie aus Fig. 1a klar ersichtlich ist. Die Anordnung ist außerdem so getroffen, dass alle Laufrollen zu derselben Seite des von den Längs- und Querträgern 4 bis 7 gebildeten Rahmens, d. h. im Ausführungsbeispiel zur Vorderseite des Rahmens hinragen.

Der von den Längs- und Querträgern 4 bis 7 gebildete Rahmen und die an ihm angebrachten Teile bilden ein vorzugsweise vorgefertigtes Haltegestell-Modul.

Der Laufwagen 2 enthält zwei als Laufschienen 29, 30 ausgebildete, gerade Längsträger und zwei vorzugsweise senkrecht dazu angeordnete, ebenfalls gerade Querträger 31 und 32, die z. B. aus Vierkantrohren bestehen, mit den Laufschienen 29, 30 verbunden sind und mit diesen einen rechteckigen Rahmen bilden. Die Laufschienen 29, 30 besitzen einen U- oder C-förmigen Querschnitt und dienen als Laufbahnen für die Laufrollen 14 bis 25. Daher haben die Laufschienen 29, 30 einen Abstand von einander, der dem in z-Richtung gemessenen Abstand der Laufrollen 14, 15 von den Laufrollen 16, 17 entspricht. Außerdem ist die Anordnung so getroffen, dass die Laufschienen 29, 30 in x-Richtung und von außen bzw. in Fig. 1a von links her auf die am Haltegestell 1 montierten Laufrollen aufgeschoben bzw. aufgesteckt werden können, wie aus Fig. 6a ersichtlich ist. Zu diesem Zweck sind die Querschnitte der Laufschienen 29, 30 gemäß Fig. 7 und 8 so gewählt, dass sich Schenkel 29a, 30a von oben auf die ersten Laufrollen 14 bzw. 16 auflegen, Schenkel 29b, 30b an den Laufrollen 18, 20 anliegen und Schenkel 29c, 30c an den dritten Laufrollen 22, 24 zu liegen kommen. Unter der Voraussetzung, dass die Längsträger 4, 5 in der Gebrauchslage horizontal, d. h. parallel zur x-Richtung angeordnet sind, stützen somit die ersten Laufräder 14 bis 17 den Laufwagen 2 in vertikaler Richtung, während die Laufrollen 18, 22 bzw. 19, 23 eine seitliche, in Richtung der y-Achse des gedachten Koordinatensystems wirkende Führung der Laufschiene 29 und die Laufrollen 20, 24 bzw. 13, 25 in entsprechender Weise eine seitliche (horizontale) Führung der Laufschiene 30 bewirken. Mit besonderem Vorteil können die verschiedenen Laufrollen auch einstellbar angeordnet werden, um eine weitgehend spielfreie Bewegung des Laufwagens 2 auf dem Haltegestell 1 zu ermöglichen.

An dem Querträger 31 sind zwei, in dessen Längsrichtung beabstandete vierte Laufrollen 34 und 35 drehbar befestigt. Die Drehachsen dieser Laufrollen 34, 35 sind parallel zu den Längsträgern 29, 30 des Laufwagens 2 angeordnet. Außerdem sind die vierten Laufrollen 34, 35 wie die ersten Laufrollen 14 bis 17 als Kombinationsrollen ausgebildet und mit einer zentralen Aussparung versehen, in der je eine fünfte Laufrolle 36 und 37 drehbar gelagert ist, deren Drehachsen im eingebauten Zustand senkrecht zu den Drehachsen der vierten Laufräder 34, 35 und ebenfalls senkrecht zu den Längsachsen der Querträger 30 und 31 angeordnet sind.

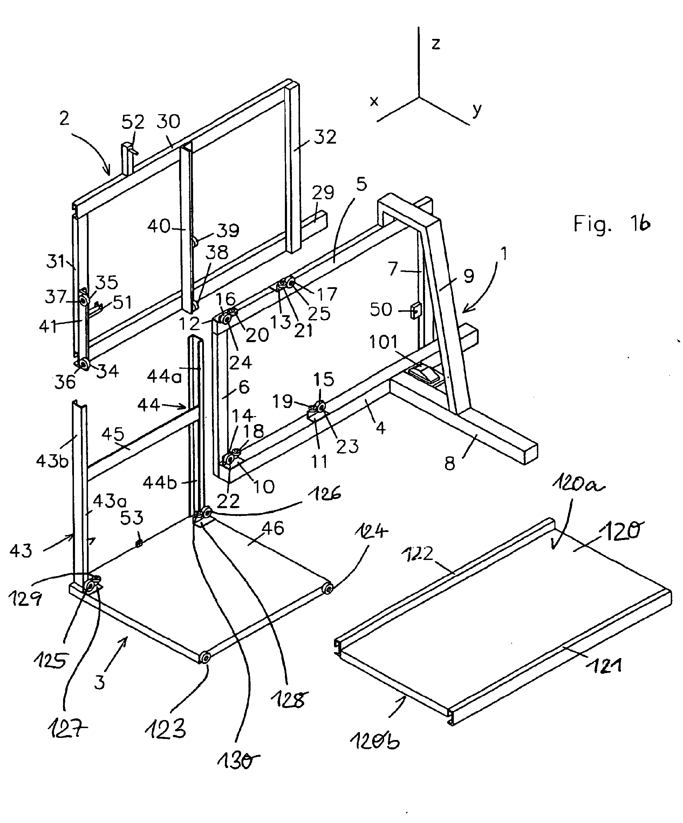

Entsprechende vierte Laufrollen 38 und 39 sind an einem Querträger 40 drehbar montiert, der in einem mittleren Bereich des Laufwagens 2 und parallel zu den Querträgern 31, 32 angeordnet und mit den Längsträgern 29, 30 verbunden ist. Auch diese Laufrollen 38, 39 sind Kombinationsrollen, die in ihnen drehbar gelagerte, fünfte und den Laufrollen 36, 37 entsprechende Laufrollen tragen, die in Fig. 6a,b jedoch nicht sichtbar sind. Außerdem sind die vierten und fünften Laufrollen 34 bis 39 gemäß Fig. 1a vorzugsweise mit den Winkelstücken 10 bis 13 entsprechenden Winkelstücken (z. B. 41) und so an den Querträgern 31 und 40 befestigt, dass sie nach vom etwas aus dem von den Trägern 29 bis 32 und 40 gebildeten Rahmen herausragen, wie aus Fig. 1 a klar ersichtlich ist.

Im Übrigen bilden der von den Längs- und Querträgern 29 bis 32 und 40 gebildete Rahmen und die an ihm gelagerten Teile einen vorzugsweise vorgefertigten Laufwagen-Modul.

Die Ladevorrichtung 3 enthält im Ausführungsbeispiel zwei als Laufschienen 43, 44 ausgebildete Längsträger, die in einem mittleren Teil durch einen Querträger 45 verbunden sind. An unteren Enden sind die Laufschienen 43, 44 mit einem Ladeelement 46 fest verbunden, das z. B. als eine planparallele Platte, als eine nach Art eines Gabelstaplers ausgebildete Gabel oder sonst wie ausgebildet ist.

Die Laufschienen 43, 44 sind mit den Abständen der Laufrollen 34, 38 bzw. 35, 39 entsprechenden Abständen angeordnet, weisen vorzugsweise einen U- oder C-förmigen Querschnitt auf und dienen als Laufbahnen für die vierten und fünften Laufrollen 34 bis 39. Die Laufrollen 34 bis 39 sind außerdem vorzugsweise analog zu den Laufrollen 14 bis 25 so gelagert, dass die Laufschienen 43, 44 in ähnlicher Weise und z. B. in von unten her auf die am Laufwagen 2 montierten Laufrollen 34 bis 39 aufgeschoben bzw. aufgesteckt werden können, wie oben anhand der Fig. 7 und 8 für das Aufschieben der Laufschienen 29 und 30 auf die Laufrollen 14 bis 25 des Haltegestells 1 beschrieben ist. Dabei rollen z. B. die vierten Laufrollen 34, 35 und 38, 39 an seitlichen Schenkeln 43a, 44a und die fünften Laufrollen 36, 37 an mittleren Schenkeln 43b, 44b der Laufschienen 43, 44 der Ladevorrichtung 3 ab.

Abgesehen davon bilden der aus den Laufschienen 43, 44 und dem Querträger 45 gebildete Rahmen und die Ladeplattform 46 ein vorzugsweise vorgefertigtes Ladevorrichtung-Modul.

In einer weiteren, in Fig. 1b gezeigten Ausführung des Ladelifts ist eine Aufsatzplattform 120 zum Aufschieben auf die Ladeplattform 46 vorgesehen. Die bevorzugt rechteckige Aufsatzplattform 120 weist entlang ihrer Längsränder jeweils eine Führungsschiene 121, 122 auf. Dabei überragt eine im auf die Ladeplattform 46 aufgeschobenen Zustand den laufschienenartigen Längsträgern 43, 44 der Ladevorrichtung 3 zugewandte Führungsschiene 122 eine einer Aufnahme von Ladung dienende Oberseite 120a der Aufsatzplattform 120. Die der Führungsschiene 122 gegenüberliegend vorgesehene Führungsschiene 121 ist eine Unterseite 120b der Aufsatzplattform 120 nach unten überragend angebracht. Durch diese Art der Anbringung der den Laufschienen 29, 30 entsprechenden Führungsschienen 122, 121 wird eine Führung durch an der Ladeplattform 46 angebrachte drehbar gelagerte Laufrollen 123 bis 126 mit Drehachse parallel zur Aufnahmefläche der Ladeplattform 46 ermöglicht.

Dabei sind die Laufrollen 123, 124 an einem den Laufschienen 43, 44 abgewandten stirnseitigen Randabschnitt der Ladeplattform 46 vorgesehen. Die Laufrollen 125, 126 sind an Winkelstücken 127, 128, die mit ihren Schenkeln an den Laufschienen 43, 44 und der Ladeplattform befestigt sind, angebracht. Die Winkelstücke 127, 128 entsprechen hinsichtlich ihres Aufbaus und ihrer Materialbeschaffenheit dabei den Winkelstücken 10 bis 13. Die Laufrollen 125, 126 greifen beim Aufschieben der Aufsatzplattform 120 auf die Ladeplattform 46 in die im Querschnitt im Wesentlichen C-förmigen Führungsschiene 122 ein. Entsprechendes gilt für die Laufrollen 123, 124 bzgl. der Führungsschiene 121. Die Laufrollen 125, 126 halten unterstützt von den Laufrollen 123, 124 die Aufsatzplattform 120 unter Aufnahme von durch Beladungsgegenstände darauf ausgeübten Kräften auf der Ladeplattform 46. Jeweils an den Winkelstücken 127, 128 angebrachte und drehbar gelagerte Laufrollen 129, 130 mit Drehachse parallel zu den Laufschienen 43, 44 dienen im aufgesetzten Zustand der Aufsatzplattform 120 auf der Ladeplattform 46 der Führung der C-förmigen Führungsschiene 122 zur Vermeidung einer Verkantung der Aufsatzplattform 120.

Die Laufrollen 123 bis 126 entsprechen den Laufrollen 36 bis 39 und die Laufrollen 129, 130 den Rollen 18 bis 21. Die Aufsatzplattform 120 weist vorzugsweise einen geschweißten Rahmen auf und kann insbesondere in einem wenigstens teilweise gegenüber der Ladeplattform 46 ausgezogenen Zustand zur Bildung stabiler Ladebrücken auf Rampen und dgl. abgesetzt werden. Im auf die Ladeplattform 46 aufgeschobenen Zustand ist die Aufsatzplattform 120 mit Hilfe von üblichen Anschlägen etwa in einer oder beiden Führungsschienen 121, 122 gegen ein Lösen von der Ladeplattform 46 gesichert. Wie in Fig. 6b gezeigt kann die Aufsatzplattform 120 erfindungsgemäß bei einem Transportvorgang gegenüber der Ladeplattform 46 in x-Richtung ausgezogen eingesetzt werden. Die Aufsatzplattform 120 und die Ladeplattform 46 sind zur Aufnahme von schweren Stückgütern wie u.a. Heizkesseln geeignet. Wie in Fig. 6b veranschaulicht ist die Aufsatzplattform 120 erfindungsgemäß so dimensioniert, dass sie beim Gütertransport übliche Paletten insbesondere Europaletten, Gitterboxen, Container oder übliche Behältnisse aufnehmen kann.

Der Zusammenbau der drei Module ist denkbar einfach. Es ist beispielsweise möglich, das Haltegestell 1 und den Laufwagen 2 dadurch miteinander zu verbinden, dass sie ineinander gesteckt und dazu die Laufrollen 14 bis 25 in die zugehörigen Laufschienen 29, 30 eingeführt werden. Der Laufwagen 2 kann dann manuell und parallel zu den Längsträgern 4, 5 des Haltegestells 1 auf diesem hin- und hergefahren werden, wobei die ersten bis dritten Laufrollen in den Laufschienen 29 und 30 abrollen. In entsprechender Weise können der Laufwagen 2 und die Ladevorrichtung 3 ineinander gesteckt und dazu die Laufrollen 34 bis 39 in die zugehörigen Laufschienen 43, 44 eingeführt werden. Die Laufschienen 43, 44 übernehmen hier auch die Funktion von Führungsschienen. Die Ladevorrichtung 3 ist dann manuell und parallel zu den Querträgern 31 und 40 des Laufwagens 2 auf diesem hin- und herfahrbar, wobei die vierten und fünften Laufrollen 34 bis 39 in den Laufschienen 43, 44 abrollen. Auf dieselbe Weise ist es möglich, alle drei Module zusammenzustecken, wodurch die gebrauchsfertige Baueinheit nach Fig. 6a erhalten wird. Eine Zerlegung der Baueinheit in die drei Module ist möglich, indem die Module einfach in entgegengesetzte Richtungen bewegt und dadurch die Laufschienen von den zugehörigen Laufrollen abgezogen werden.

Ist es erwünscht, den Bewegungshub der Module im zusammengebauten Zustand zu begrenzen, um z. B. eine ungewollte Demontage zu verhindern, kann dies dadurch bewirkt werden, dass die betreffenden Laufschienen an ihren Enden mit geeigneten, jedoch lösbaren Anschlägen versehen werden. Diese dienen dann sowohl zur Begrenzung des Bewegungshubs als auch zur Herstellung einer fest zusammenhängenden Baueinheit.

Nach einem besonders bevorzugten und bisher für am besten gehaltenen Ausführungsbeispiel können der Laufwagen 2 und/oder die Ladevorrichtung 3 auch mit Hilfe irgendeines Motors od. dgl. hin- und hergefahren werden. Hierzu ist gemäß Fig. 6a ein erster Antrieb 48 zur Verschiebung des Laufwagens 2 relativ zum Haltegestell 1 und/oder ein zweiter Antrieb 49 zur Verschiebung der Ladevorrichtung 3 relativ zum Laufwagen 2 vorgesehen. Beide Antriebe 48, 49 sind vorzugsweise als Linearantriebe ausgebildet, die jeweils zwischen zwei Haltepunkten 50, 51 bzw. 52, 53 angeordnet und mit diesen fest verbunden sind. Gemäß Fig. 1a,b und 6a,b ist z. B. einer der Haltepunkte 50 für den ersten Antrieb 48 am Querträger 7 des Haltegestells 1, der andere Haltepunkt 51 am Querträger 31 des Laufwagens 2 befestigt. Dagegen ist einer der Haltepunkte 52 für den zweiten Antrieb 49 am Längsträger 30 des Laufwagens 2, der andere Haltepunkt 53 am hinteren Ende des Ladeelements 46 angebracht. Zur Verbindung werden vorzugsweise leicht lösbare Verbindungselemente verwendet, so dass die Antriebe 48, 49 zwecks Montage/Demontage der Module auf einfache Weise mit den zugehörigen Haltepunkten 50 bis 53 verbunden oder von diesen getrennt werden können.

Die Antriebe 48, 49 bestehen vorzugsweise aus Linearantrieben. Sie weisen dazu z. B. je einen mit einem Haltepunkt (z. B. 50, 52) verbundenen, elektrischen Reversiermotor 54, 55 auf, an dem ein Rohr 56, 57 befestigt ist, in dem eine von Reversiermotor 54, 55 in Umdrehungen versetzbare Gewindespindel und eine auf diese aufgedrehte, im Rohr 56, 57 undrehbar, aber axial verschiebbar gelagerte Mutter angeordnet sind. Die Mutter ist jeweils mit einer aus dem Rohr 56, 57 herausragenden Stange 58, 59 verbunden, deren freies Ende mit dem jeweils anderen Haltepunkt 51, 53 verbunden wird. Auf diese Weise können der Laufwagen 2 und/oder die Ladevorrichtung 3 durch Einschalten des jeweiligen Reversiermotors 54, 55 in der einen oder anderen Drehrichtung motorisch hin-und herbewegt werden. Alternativ können natürlich auch andere Antriebe wie z. B. hydraulisch oder pneumatisch betriebene Antriebe in Form von Zylinder/Kolben-Anordnungen od. dgl. vorgesehen werden. Zusätzlich kann zur Bewegung des Laufwagens 2 und/oder der Ladevorrichtung 3 je eine nicht gezeigte, manuell betätigbare und gegebenenfalls in den entsprechenden Antrieb integrierte Handkurbel vorhanden sein, die eine Notfallbetätigung ermöglicht. Schließlich ist es vorteilhaft, Endschalter vorzusehen, die die Antriebe beim Erreichen vorgewählter Stellungen des Laufwagens 2 und/oder der Ladevorrichtung 3 abschalten und damit gleichzeitig der Hubbegrenzung dienen und/oder Rutschkupplungen anzubringen, die bei Überlast ansprechen. Abgesehen davon dienen die an den Haltepunkten 50 bis 53 vorgesehenen Befestigungen auch der Schaffung einer gebrauchsfertigen, fest zusammenhängenden Baueinheit.

Zur Inbetriebnahme des Ladelifts wird die Unterkonstruktion 8, 9 beispielsweise nahe einer Rückwand einer Lastkraftwagen-Pritsche, eines Personenkraftwagen-Kofferraums od. dgl. angebracht und z. B. mit dem Fuß 8 so an deren Boden befestigt, dass die Längsträger 4, 5 parallel zur Fahrzeuglängsachse angeordnet sind, um den Ladelift vom Heck des betreffenden Fahrzeugs her zu benutzen. Andere Befestigungen sind ebenfalls möglich. Sie ergeben sich häufig in Abhängigkeit von an Kraftfahrzeugen ohnehin vorgesehenen Befestigungsstellen. Die Längsträger 4, 5 sind dann parallel zur gedachten x-Achse, d. h. horizontal, die Querträger 6, 7 dagegen parallel zur gedachten z-Achse, d. h. vertikal angeordnet.

Es werden jetzt in der beschriebenen Weise der Laufwagen 2 auf das Haltegestell 1 und die Ladevorrichtung 3 auf den Laufwagen 2 aufgesteckt und in x- bzw. z-Richtung des gedachten Koordinatensystems in ihre am weitesten zurückgezogene Stellung gefahren. In dieser Lage sind sie z. B. vollständig innerhalb eines Koffer- oder anderen Laderaums bzw. der Umfangskontur des betreffenden Kraftfahrzeugs in einer Transportstellung angeordnet, wobei das Ladeelement 46 vorzugsweise auf der jeweiligen Ladefläche aufliegt.

Soll ein Ladevorgang erfolgen, wird zunächst die Ladevorrichtung 3 z. B. mittels des Antriebs 49 in z-Richtung angehoben, bis sie etwas oberhalb der Ladefläche und gegebenenfalls auch oberhalb einer diese begrenzenden Schwelle angeordnet ist. Diese Position wird z. B. durch einen den Antrieb 49 stillsetzenden Endschalter festgelegt. Sodann wird der Laufwagen 2 z. B. mittels des Antriebs 48 in x-Richtung in die am weitesten ausgefahrene Position bewegt, die z. B. durch einen den Antrieb 48 stillsetzenden Endschalter festgelegt und so gewählt ist, dass die Ladevorrichtung 3 jetzt vollständig außerhalb der Umfangskontur des betreffenden Kraftfahrzeugs befindet. Anschließend wird die Ladevorrichtung 3 z. B. mittels des Antriebs 49 in z-Richtung abgesenkt, bis das Ladeelement 46 auf der Fahrbahn, auf dem auch das Kraftfahrzeug abgestellt ist, aufliegt, was z. B. mit einem separaten Sensor angezeigt wird, der den Antrieb 49 stillsetzt.

In der so erreichten Ladestellung des Ladelifts kann das Beladen des Ladeelements 46 erfolgen. Danach wird dieses wieder nach oben in eine obere, z. B. durch einen weiteren Endschalter festgelegte Endstellung gefahren, die geringfügig höher als die Ladefläche oder die sie begrenzende Schwelle liegt. Danach wird der Laufwagen 2 in den Laderaum od. dgl. zurückgezogen und in eine z. B. durch einen Endschalter festgelegten Position angehalten. Abschließend wird die Ladevorrichtung 3 etwas abgesenkt, bis das Ladeelement 46 auf der Ladefläche aufliegt. Der Ladelift befindet sich nun wieder in seiner Transportstellung.

Das Ladegut kann wahlweise auf dem Ladeelement 46 verbleiben oder von dort weiter in das Innere des Fahrzeugs od. dgl. gerollt oder geschoben werden. Insbesondere können Rollstühle od. dgl. an andere Bereiche der Ladefläche gerollt werden, um Platz für wenigstens einen weiteren Rollstuhl zu schaffen. Selbstfahrende Rollstuhlfahrer können dies auch selbst erledigen.

Alternativ ist es möglich, das Ladeelement 46 nach dem Beladen nur bis in die Höhe der Ladefläche anzuheben und das Ladegut von dort in das Fahrzeug zu heben oder zu rollen, wozu eine am Ladeelement 46 schwenkbar gelagerte, nicht dargestellte Klappe ausgeklappt und als Brücke zur Ladefläche benutzt werden kann. Die Ladevorrichtung 3 lässt sich dann schneller wieder in die Ladestellung absenken.

Wird der beschriebene Ladelift nicht benötigt, kann er auf einfache Weise ausgebaut werden. Hierzu wird der Laufwagen 2 ganz ausgefahren und die Ladevorrichtung 3 auf den Erdboden-abgesenkt. Anschließend wird der Antrieb 48 am Haltepunkt 51 gelöst und die Stange 58 in das Rohr 56 zurückgezogen. Der Laufwagen 2 bleibt hierbei ausgefahren und wird dann zusammen mit der Ladevorrichtung 3 nach außen vom Kraftfahrzeug weg-und vom Haltegestell 1 abgezogen. Anschließend kann der Laufwagen 2 bei Bedarf von der Ladevorrichtung 3 getrennt werden, wozu z. B. die Verbindung am Haltepunkt 53 gelöst wird. Schließlich wird das Haltegestell 1 vom Fahrzeug gelöst, diesem entnommen und an einem geeigneten Ort abgestellt, so dass das Fahrzeug auch ohne irgendwelche Teile des Ladelifts benutzt werden kann.

Alternativ können alle beschriebenen Bewegungen auch zu dem Zweck, ein im Fahrzeug befindliches Ladegut zu entladen und/oder manuell, insbesondere z. B. unter Anwendung von nicht dargestellten Handkurbeln od. dgl. und in einer anderen als der beschriebenen Weise durchgeführt werden.

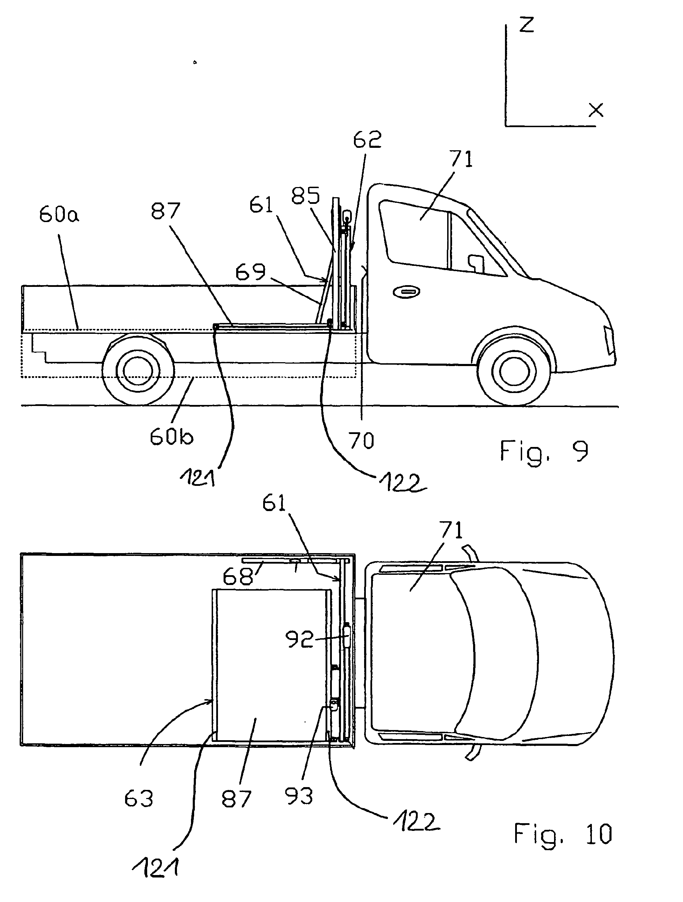

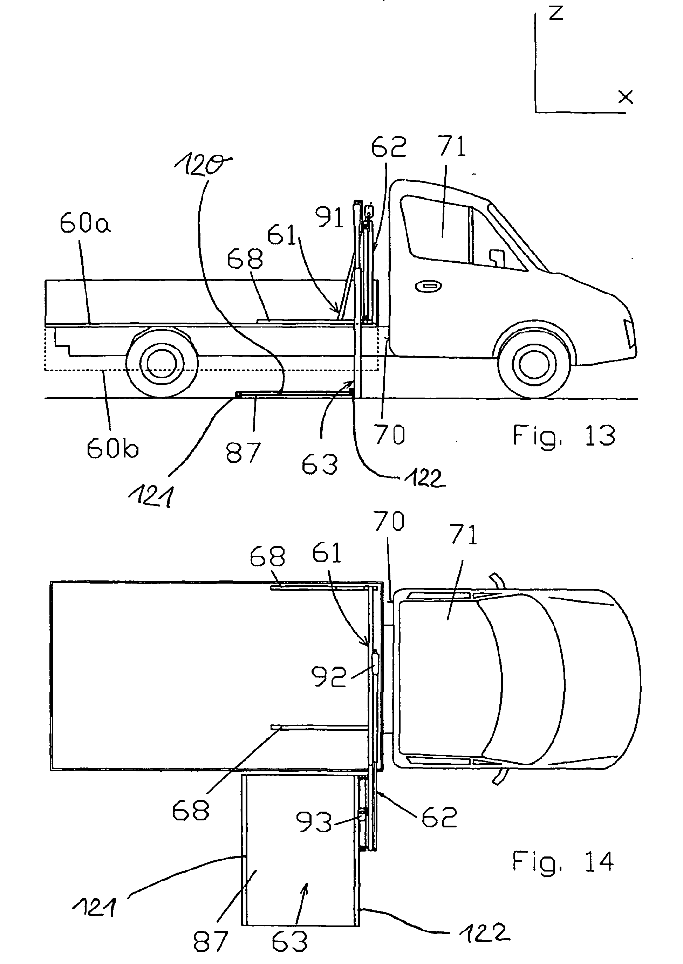

Während das Ausführungsbeispiel nach Fig. 1a,b bis 8 bevorzugt dazu dient, die Ladevorrichtung durch eine Heckklappe eines Fahrzeugs hindurch ein bzw. auszufahren, zeigen Fig. 9 bis 17 einen Ladelift, der von einer Seite eines Fahrzeugs her benutzt wird, und zwar am Beispiel eines Klein-Lastkraftwagens mit einem Pritschenaufbau, der gemäß Fig. 9 und 13 eine Ladefläche 60a und eine in Fig. 9 und 13 nur gestrichelt dargestellte, nach unten geschwenkte Seitenklappe 60b aufweist. Analog zum Ausführungsbeispiel nach Fig. 1 a,b bis 8 enthält der Ladelift drei zusammensteckbare, vorzugsweise vorgefertigte Module, nämlich ein Haltegestell 61, einen Laufwagen 62 und eine Ladevorrichtung 63.

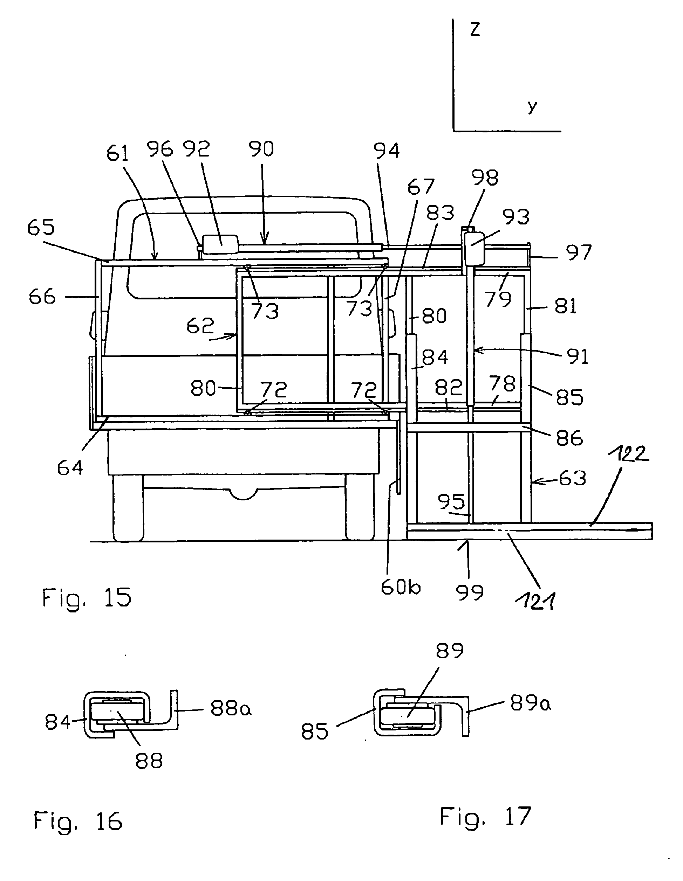

Das Haltegestell 61 weist gemäß Fig. 15 zwei parallele Längsträger 64, 65 und zwei senkrecht dazu angeordnete, mit diesen zu einem Rahmen verbundene Querträger 66, 67 auf. Gemäß Fig. 9, 10, 13 und 14 ist dieser Rahmen auf zwei Füßen 68 abgestützt und mit wenigstens einer Stütze 69 zusätzlich gehalten, wobei die Füße 68 und die Stütze 69 wiederum eine Unterkonstruktion bilden, die der Befestigung des Ladelifts am Kraftfahrzeug dient. Im Gegensatz zu Fig. 1a,b bis 8 wird der aus den Trägern 64 bis 67 gebildete Rahmen jedoch so angeordnet, dass er parallel z. B. zur Rückwand 70 einer Fahrerkabine 71 des Kraftfahrzeugs angeordnet ist und seine Längsträger 64, 65 quer zur Fahrtrichtung und parallel zur y-Achse eines gedachten Koordinatensystems erstreckt sind.

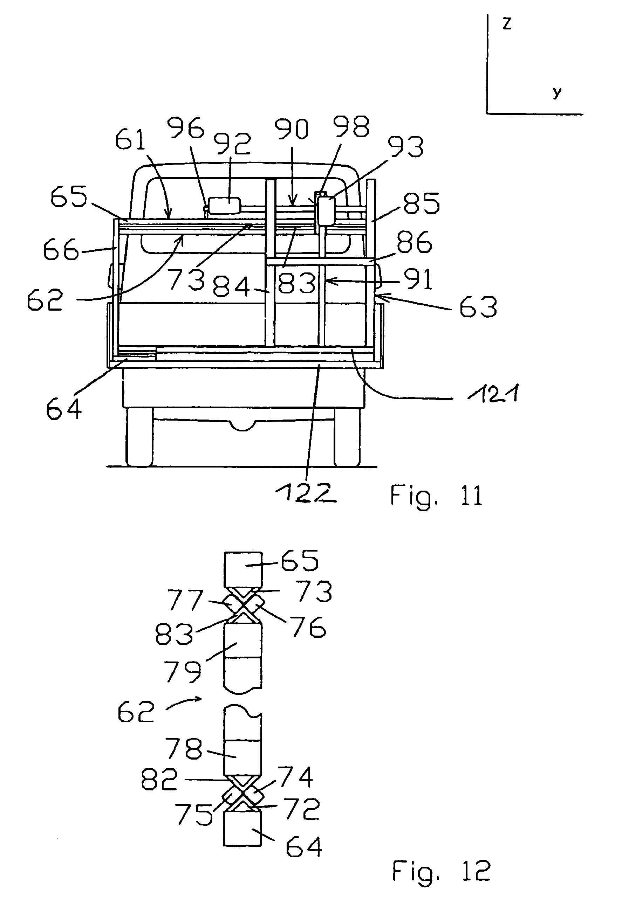

Die Längsträger 64, 65 und die Querträger 66, 67 bestehen vorzugsweise aus die Stabilität erhöhenden Vierkantprofilen. An der Oberseite des unteren Längsträgers 64 und der Unterseite des oberen Querträgers 65 sind je zwei 90°-Winkelprofile 72 bzw. 73 befestigt (Fig. 12), an deren senkrecht zueinander stehenden Schenkeln je eine Laufrolle 74, 75 bzw. 76, 77 drehbar befestigt ist. Die Drehachsen der Laufrollen 74, 75 bzw. 76, 77 stehen entsprechend der Lage der beiden Schenkel der Winkelstücke 72, 73 jeweils paarweise senkrecht zueinander, wie Fig. 12 deutlich zeigt.

Der Laufwagen 62 weist gemäß Fig. 15 vorzugsweise zwei parallele Längsträger 78 und 79 sowie zwei senkrecht dazu angeordnete Querträger 80, 81 auf, die zu einem rechteckigen Rahmen miteinander verbunden sind. Die Längsträger 78, 79 bestehen gemäß Fig. 12 vorzugsweise wiederum aus Vierkantprofilen, wobei gemäß Fig. 12 und 15 an der Unterseite des unteren Längsträgers 78 und an der Oberseite des oberen Längsträgers 79 je zwei über deren Länge durchgehende, als Laufschienen 82, 83 ausgebildete Winkelstücke mit zwei senkrecht zueinander stehenden Schenkeln befestigt sind. Der in z-Richtung gemessene Abstand der Längsträger 78, 79 des Laufwagens 62 ist entsprechend dem Abstand der Längsträger 64, 65 des Haltegestells 61 so bemessen, dass der Laufwagen 62 von zumindest einer Seite her (z. B. in Fig. 15 von rechts her) in das Haltegestell 61 derart eingefahren werden kann, dass er zwischen dessen beiden Längsträgern 64, 65 angeordnet ist und die Firstlinien der Laufschienen 82, 83 gemäß Fig. 12 zwischen je zwei zugeordneten Laufrollen 74, 75 bzw. 76, 77 des Haltegestells 61 zu liegen kommen. Infolge dieser Anordnung rollen im montierten Zustand des Laufwagens 2 die Laufrollen 74 bis 77 an ihnen zugeordneten Schenkeln der Laufschienen 82, 83 ab, wodurch der Laufwagen 62 verschiebbar im Haltegestell 61 gelagert und sowohl vertikal (z-Richtung) als auch seitlich (y-Richtung) in diesem geführt ist.

Die Ladevorrichtung 63 ist mit der Ladevorrichtung 3 nach Fig. 1a,b bis 8 weitgehend identisch. Sie enthält zwei aus U- oder C-formigen Profilen hergestellte Längsträger bzw. Laufschienen 84 und 85 (z. B. Fig. 11 und 15), die in einem mittleren Bereich durch einen Querträger 86 verbunden und an unteren Enden mit einem senkrecht abstehenden Ladeelement 87 in Form einer Ladeplattform, Gabel od. dgl. versehen sind. Wie bei dem anhand der Fig. 1a,b bis 8 erläuterten Ausführungsbeispiel ist auch hier eine Aufsatzplattform 120 zum Aufschieben auf die Ladeplattform 87 vorgesehen. Die bevorzugt rechteckige Aufsatzplattform weist dazu bereits in der Fig. 1b dargestellte Führungsschienen 121, 122 auf und dient einer Vergrößerung der Beladungsfläche des erfindungsgemäßen Ladelifts. Im aufgeschobenen Zustand ist die Aufsatzplattform 120 mit Hilfe von üblichen Anschlägen etwa in einer oder beiden Führungsschienen gegen ein Lösen von der Ladeplattform 87 gesichert. Die Laufschienen 84, 85 sind, wie Fig. 16 und 17 zeigen, analog zu den Laufschienen 29, 30 (Fig. 1a,b bis 8) ausgebildet und nehmen im montierten Zustand je zwei Laufrollen 88 oder 89 auf, die an Winkelstücken 88a, 89a drehbar gelagert sind. Die Laufrollen 88, 89 bestehen vorzugsweise wie die Laufrollen 14 bis 17 (Fig. 1a,b) aus Kombinationsrollen, die gleichzeitig eine Tragefunktion in vertikaler Richtung und eine Führungsfunktion in horizontaler Richtung erfüllen. Die Winkelstücke 88a, 89a sind an den Querträgern 80, 81 des Laufwagens 82 so befestigt, dass die Ladevorrichtung 63 z. B. von unten her mit ihren Laufschienen 84, 85 auf die Laufräder 88, 89 aufgesteckt und dann längs der Querträger 80, 81 verfahren werden können. Ist im Ausführungsbeispiel die Fahrzeuglängsachse parallel zur x-Achse des gedachten Koordinatensystems angeordnet, kann die Verschiebung des Laufwagens 62 auf dem Haltegestell 61 in y-Richtung und die Verschiebung der Ladevorrichtung 63 am Laufwagen 62 in z-Richtung erfolgen. Außerdem bilden das Haltegestell 61, der Laufwagen 62 und die Ladevorrichtung 63 wiederum je ein in sich abgeschlossenes Modul, wobei der Laufwagen 62 auf das Haltegestell 61 und die Ladevorrichtung 63 auf den Laufwagen 62 aufgesteckt werden kann.

Die Montage/Demontage und die Arbeitsweise des Ladelifts nach Fig. 9 bis 17 entsprechen im Wesentlichen denen des Ladelifts nach Fig. 1a,b bis 8, so dass eine erneute Beschreibung dieser Funktionen nicht erforderlich ist.

Grundsätzlich ist es möglich, den Laufwagen 62 und die Ladevorrichtung 63 manuell und gegebenenfalls mit geeigneten Hilfsmitteln in Form von Handkurbeln od. dgl. zu verschieben. Bevorzugt wird jedoch zur Durchführung dieser Bewegungen jeweils ein Antrieb 90, 91 (z. B. Fig. 11 und 15) vorgesehen, der analog zu Fig. 1a,b bis 8 ein Linearantrieb ist und je eine mit einem elektrischen Reversiermotor 92 verschiebbare Stange 94, 95 aufweist. Der Antrieb 90 ist zwischen einem Haltepunkt 96 am Haltegestell 61 und einem Haltepunkt 97 am Laufwagen 62 montiert, wohingegen der Antrieb 91 zwischen einem Haltepunkt 98 am Laufwagen 62 und einem Haltepunkt 99 an der Ladevorrichtung 63 montiert ist. Auch insoweit entspricht der Ladelift nach Fig. 9 bis 17 dem nach Fig. 1 a,b bis 8, so dass eine weitergehende Beschreibung nicht erforderlich ist.

Wie insbesondere Fig. 13 bis 15 zeigen, ist die Ladevorrichtung 63 bei heruntergeklappter Seitenklappe 60b des Fahrzeugs so weit in y-Richtung ausgefahren, dass sie vollständig außerhalb der Umfangskontur und der Ladefläche 60a des Fahrzeugs angeordnet ist. Die Ladevorrichtung 63 kann daher in z-Richtung abgesenkt werden, bis das Ladeelement 87 bzw. auch die aufgeschobene Aufsatzplattform 120 auf dem Erdboden bzw. der Fahrbahn aufliegt und der Ladelift eine Ladestellung einnimmt. Je nach den gegebenen Abständen kann das Aufsatzelement 120 bzgl. der Ladeplattform 87 von dem Fahrzeug weg ausgezogen werden. Nach dem Ladevorgang wird die Ladevorrichtung 63 zunächst so weit angehoben, dass das Ladeelement 87 bzw. auch die aufgeschobene Aufsatzplattform 120 zumindest in Höhe der Ladefläche 60a angeordnet ist. Anschließend kann dann der Laufwagen 62 mit der Ladevorrichtung 63 in y-Richtung in das Fahrzeug eingeführt werden, bis der gesamte Ladelift entsprechend Fig. 10 und 11 innerhalb der äußeren Fahrzeugkontur in einer Transportstellung angeordnet ist und die Seitenklappe 60b wieder hochgeklappt und verriegelt werden kann. Ein wesentlicher Unterschied zwischen den Ladeliften nach Fig. 1a,b bis 8 und 9 bis 17 besteht somit nur darin, dass der eine nach hinten und der andere zur Seite hin aus dem Fahrzeug, dem Kofferraum, der Pritsche od. dgl. herausgefahren werden kann.

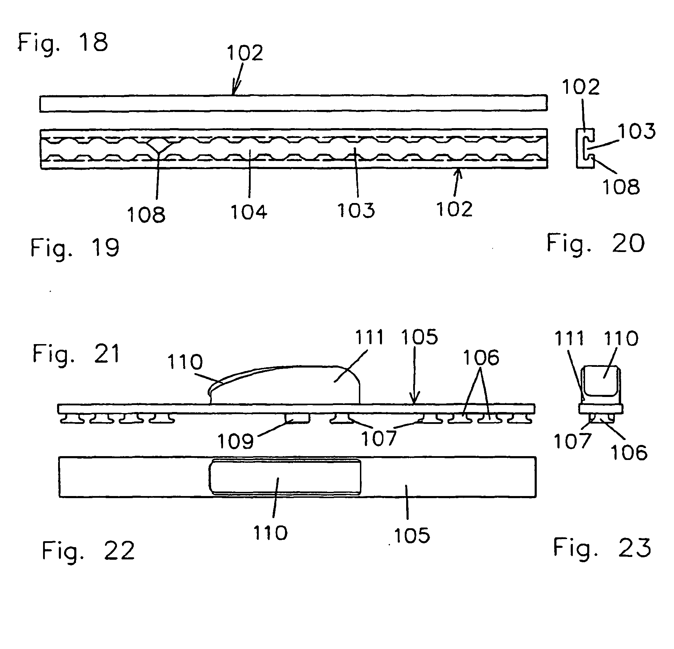

Zur schnellen Montage und Demontage des Haltegestells 1 bzw. 61 oder dessen Unterkonstruktion 8, 9 (Fig. 1a,b und 6a,b) werden vorzugsweise an sich bekannte Schnellverschlüsse 101 angewendet, die gemäß Fig. 18 bis 22 eine am Boden der Ladefläche zu befestigende Montageschiene 102 aufweisen. Nach dem Ausführungsbeispiel der Fig. 18 bis 22 besteht die Montageschiene 102 aus einem C-förmigen Profil mit einem im montierten Zustand z. B. nach oben offenen und seitlich mit Hinterschneidungen (Fig. 20) versehenen Längsschlitz 103. Die seitlichen Ränder dieses Längsschlitzes 103 weisen in einem vorgegebenen Rasterabstand kreisförmig erweiterte Öffnungen 104 auf. Ferner weist der Schnellverschluss ein z. B. aus Stahl bestehendes, mit dem Haltegestell 1, 61 zu verbindendes Verschlusselement 105 auf, das an seiner Unterseite mit dem Abstand der Öffnungen 104 angeordneten Verschlussbolzen 106 versehen ist. Die freien Enden der Verschlussbolzen 106 weisen kreisförmig erweiterte Köpfe 107 auf, deren Durchmesser im Wesentlichen denen der Öffnungen 104 entsprechen. Die Anordnung ist außerdem so getroffen, dass die Köpfe 107 in die Öffnungen 104 gesteckt und dann in dem Längsschlitz 103 verschoben werden können. Durch Längsverschiebung des Verschlusselements 105 relativ zur Montageschiene 102 um z. B. eine halbe Rasterlänge gelangen die Köpfe 106 in einen zwischen zwei Öffnungen 104 liegenden Abschnitt, der den Längsschlitz 103 begrenzende und die Köpfe 107 der Verschlussbolzen 106 seitlich überdeckende Nasen 108 aufweist. Dadurch ist ein senkrecht dazu erfolgendes Abziehen des Verschlusselements 105 von der Montageschiene 102 nicht mehr möglich.

Der Schnellverschluss 101 weist außerdem einen Verriegelungsbolzen 109 auf, der dazu dient, ungewollte Verschiebungen des Verschlusselements 105 in Längsrichtung des Längsschlitzes 103 zu vermeiden. Der Verriegelungsbolzen 109 ist um einen halben Rasterabstand relativ zu den Verschlussbolzen 106 versetzt am Verschlusselement 105 befestigt und weist einen dem Durchmesser der Öffnungen 104 entsprechenden Durchmesser auf. Der Verriegelungsbolzen 109 ist außerdem an einem Hebel 110 befestigt, der in einer Halterung 111 des Verschlusselements 105 schwenkbar gelagert ist, so dass er durch Herabdrücken dieses Hebels 110 in eine der Öffnungen 104 eingeführt werden kann, sobald das Verschlusselement 105 auf der Montageschiene 102 eine Lage einnimmt, in welcher die Köpfe 107 von den Nasen 108 überdeckt sind. Das Verschlusselement 105 ist dann unverschiebbar und unabnehmbar an der Montageschiene 102 festgelegt.

Soll das Haltegestell 1, 61 von der Montageschiene 102 gelöst werden, wird zunächst der Hebel 110 angehoben, bis der Verriegelungsbolzen 109 aus der entsprechenden Öffnung 104 herausgetreten ist. Danach wird das Verschlusselement 105 zusammen mit dem Haltegestell um eine halbe Rasterlänge längs der Montageschiene 102 verschoben, bis die Köpfe 107 wieder genau in je einer der Öffnungen 104 liegen. Das Haltegestell 1, 61 kann dann zusammen mit dem Verschlusselement 105 von der Montageschiene 102 abgehoben werden. Im Übrigen ist aber klar, dass alternativ auch andere Schnellverschlüsse verwendet werden können, die eine Montage/Demontage ohne Spezialwerkzeuge ermöglichen, obwohl grundsätzlich auch eine weitgehend dauerhafte Befestigung des Haltegestells 1, 61 auf der Ladefläche möglich wäre.

Weiterhin wäre es möglich, die Montageschiene 102 am Haltegestell und das Verschlusselement 105 am Fahrzeug zu befestigen oder zwei oder mehr Schnellverschlüsse vorzusehen, wobei die Montageschiene 102 des einen am Haltegestell und die Montageschiene 102 eines anderen Schnellverschlusses am Fahrzeug befestigt ist. Abgesehen davon ist es natürlich auch möglich, bereits am Fahrzeug vorhandene Schnellverschlüsse zur Befestigung des erfindungsgemäßen Ladelifts zu nutzen und z. B. das Haltegestell mit einem Mittel zu versehen, das mit einem solchen Schnellverschluss zusammenwirken kann.

Mit Hilfe der beschriebenen Schnellverschlüsse 101 und aufgrund der Modulbauweise kann die Einbauzeit des Ladelifts in ein Kraftfahrzeug beim erstmaligen Einbau von bisher einigen Tagen auf wenige Stunden reduziert werden.

Die anhand der beiden Zeichnungen beschriebenen Anordnungen des erfindungsgemäßen Ladelifts im Kraftfahrzeug stellen nur Beispiele dar. Insbesondere ist es möglich, das Ausführungsbeispiel nach Fig. 1a,b bis 8 so anzuordnen, dass der Laufwagen 2 analog zu Fig. 9 bis 17 in einer Richtung senkrecht zur Fahrzeuglängsachse verschoben werden kann, während das Ausführungsbeispiel nach Fig. 9 bis 17 auch so in einem Fahrzeug montiert werden kann, dass es in Fahrzeuglängsrichtung verschiebbar ist. Abgesehen davon können beide Ausführungsbeispiele auch in einem mittleren Bereich einer Ladefläche und/oder auf einer Ladefläche montiert werden, die seitlich oder nach hinten nicht durch eine Wand begrenzt ist. Insbesondere in einem solchen Fall wäre es weiterhin möglich, das Haltegestell, den Laufwagen und ggf. den Antrieb für den Laufwagen so auszubilden, dass dieser wahlweise zur einen oder anderen Seite hin aus dem Haltegestell herausgefahren werden kann. Es wäre dann möglich, je nach Situation beide Seiten des Fahrzeugs für einen Lade- oder Entladevorgang zu benutzen.

Die Erfindung ist nicht auf die beschriebenen Ausführungsbeispiele beschränkt, die auf vielfache Weise abgewandelt werden können. Das gilt insbesondere für die konkrete Ausbildung der drei Module Haltegestell, Laufwagen und Ladevorrichtung. Außerdem können zur Verschiebung des Laufwagens auf dem Haltegestell und zur Verschiebung der Ladevorrichtung auf dem Laufwagen andere als die beschriebenen Mittel vorgesehen werden. Diese Mittel können z. B. Ketten, Seile, Riemen, Zahnriemen, Zahnstangen od. dgl. enthalten, die allein oder zusätzlich zu den Antrieben vorhanden sein und mit einer Handkurbel od. dgl. zusammenwirken können. Auch die beschriebenen Rollenführungen sind als Ausführungsbeispiele zu betrachten. Insbesondere können die am Haltegestell vorgesehenen Laufrollen am Laufwagen und stattdessen die Laufschienen des Laufwagens am Haltegestell vorgesehen werden. Entsprechend können die Lagen der Laufrollen des Laufwagens und der Laufschienen der Ladevorrichtung vertauscht werden. Möglich sind auch kombinierte Führungen in der Weise, dass sowohl am Haltegestell als auch am Laufwagen bzw. sowohl am Laufwagen als auch an der Ladevorrichtung Laufrollen und Laufschienen vorgesehen werden.

Ferner können an Unterseiten der Träger der erfindungsgemäßen Haltegestelle und/oder an den Unterseiten der Ladeplattformen Rollen oder Räder angebracht sein. Das ist insbesondere für einen stationären Einsatz des erfindungsgemäßen Ladelifts etwa als Hochhubwagen außerhalb von Fahrzeugen in Gebäuden, an Laderampen usw. vorteilhaft. Bei einer anderen als der in einem Kraftfahrzeug beschriebenen Verwendung ist der erfindungsgemäße Ladelift statt an einer Ladefläche entsprechend an einer Boden- oder Wandfläche in einem Gebäude zur Überwindung eines Höhenunterschieds etwa an einer Treppe befestigt. Dabei wird der erfindungsgemäße Ladelift wie auch an einer Laderampe vorzugsweise auf einem oberen, den zu überwindenden Höhenunterschied umgebenden Niveau befestigt. Dazu ist es neben einer Befestigung an der Rampe oder einer Wand-oder Bodenfläche auch möglich, den erfindungsgemäßen Ladelift mit Hilfe von an den Füßen angebrachten Auslegern ohne direkte Befestigung stabil auf den entsprechenden Flächen zu halten.

Zur Aufnahme der Aufsatzplattform auf die Ladeplattform kann auch eine Gleitführung zwischen Ladeplattform und Führungsschiene vorgesehen sein. Bei dieser Art der Aufnahme erübrigen sich die an der Ladeplattform vorgesehenen vorderseitigen Laufrollen. Anstelle der den laufschienenartigen Längsträgern im aufgesetzten Zustand zugewandten hinteren Führungsschiene der Aufsatzplattform können auch Überwurfträger zum Festlegen der Aufsatzplattform an den Längsträgern vorgesehen sein. Entsprechend ist ein Vorsehen der auf der Ladeplattform im Ansatzbereich der Laufschienen vorgesehenen Laufrollenpaare auch hier nicht mehr notwendig. Bevorzugt kann die Aufsatzplattform durch Rollen oder Räder an ihrer Unterseite als Ladewagen ausgestaltet sein, der dann vorteilhaft an einem andern Ort beladen und auf einfache Weise zum erfindungsgemäßen Ladelift geschoben werden kann. Es versteht sich, dass die Aufsatzplattform bzgl. der Ladeplattform auch mit Hilfe von Antrieben wie sie zur Bewegung des Laufwagens und der Ladevorrichtung beschrieben und gezeigt sind, bewegt werden kann. In einem solchen Fall übernehmen die Antriebe die Sicherungsfunktion der Anschläge zur Vermeidung eines Lösens der Aufsatzplattform von der Ladeplattform.

Ferner können die zur Herstellung der verschiedenen Teile verwendeten Materialien in Abhängigkeit vom Einzelfall unterschiedlich gewählt werden, wobei jedoch geschweißte Stahlkonstruktionen wegen der erforderlichen Stabilität und des geringeren Bedarfs an die Festigkeit reduzierenden Bohrungen od. dgl. bevorzugt werden. Weiter kann es zweckmäßig sein, das Ladeelement 46, 87 schwenkbar, vorzugsweise klappbar am Rahmen der Ladevorrichtung od. dgl. zu befestigen, um es nach dem Einfahren in das Kraftfahrzeug hochschwenken bzw. hochklappen zu können und dadurch mehr Freiraum zu schaffen.

Zur weiteren Reduzierung des Platzbedarfs ist es außerdem möglich, den Laufwagen aus zwei oder mehreren, teleskopisch ineinander schiebbaren Bauteilen zusammenzusetzen. Weiterhin sind die Antriebe vorzugsweise fernsteuerbar und mit einer nicht dargestellten Steuerelektronik versehen. Die Stromversorgung erfolgt zweckmäßig mittels eines Anschlusskabels, das an eine mit der Fahrzeugbatterie verbundenen Steckdose od. dgl. anschließbar ist. Abgesehen davon ist klar, dass die Erfindung nicht nur den Ladelift selbst, sondern auch ein mit diesem ausgerüstetes Fahrzeug betreffen soll, das auch ein geschlossener Kastenwagen mit einer an einer Seite oder am Heck befindlichen Tür oder ein Kraftfahrzeug-Anhänger sein kann. Weiterhin kann das Haltegestell gleichzeitig als Halterung für eine Leiter oder ein Verdeck ausgebildet sein. Schließlich versteht sich, dass die verschiedenen Merkmale auch in anderen als den beschriebenen und dargestellten Kombinationen angewendet werden können.

Schließlich umfasst die Erfindung auch ein Fahrzeug, insbesondere Kraftfahrzeug, bei dem das Haltegestell an der Ladefläche befestigt ist. Dabei kann die Ladefläche auch von einer Seiten- oder Rückwand begrenzt sein und das Haltegestell nahe der Wand angeordnet sein. Zur Stromversorgung der erfindungsgemäß bevorzugt als elektrisch betriebene Linearantriebe ausgebildeten Antriebe ist vorzugsweise ein Anschlusskabel vorgesehen. Das Anschlusskabel ist dabei so ausgestaltet, das es in eine mit einer Fahrzeugbatterie verbundene Steckdose passt.

## Patentansprüche

1. Ladelift für ein Fahrzeug, insbesondere Kraftfahrzeug und/oder zur Überwindung von Höhenunterschieden in einem Gebäude, an einer Verkehrsmittelrampe und dgl. mit von Höhenunterschieden in einem Gebäude, an einer Verkehrsmittelrampe und dgl. mit einem am Fahrzeug und/oder an einer Wand- und/oder Bodenfläche in dem Gebäude, an der Verkehrsmittelrampe und dgl. zu befestigenden Haltegestell (1, 61), einem am Haltegestell (1, 61) in einer ersten Richtung hin- und herbewegbaren Laufwagen (2, 62) und einer am Laufwagen (2, 62) montierbaren Ladevorrichtung (3, 63), die in einer zur ersten Richtung im Wesentlichen senkrechten, zweiten Richtung zwischen einer Ladestellung und einer Transportstellung hin- und herbewegbar ist, **dadurch gekennzeichnet, dass** das Haltegestell (1, 61), der Laufwagen (2, 62) und die Ladevorrichtung (3, 63) aus je einem Modul bestehen, wobei diese Module wahlweise einzeln handhabbar und zur Herstellung einer gebrauchsfertigen Baueinheit ineinander steckbar und miteinander verbindbar sind.

2. Ladelift nach Anspruch 1, **dadurch gekennzeichnet, dass** das Haltegestell (1, 61) 15 und/oder der Laufwagen (2, 62) mit zwei geraden, parallel zueinander angeordneten ersten Laufschienen (29, 30; 82, 83) und der Laufwagen (2, 62) und/oder das Haltegestell (1, 61) mit an den ersten Laufschienen (29, 30; 82, 83) abrollenden Laufrollen (14 bis 25; 74 bis 77) versehen ist.

3. Ladelift nach Anspruch 2, **dadurch gekennzeichnet, dass** die ersten Laufschienen (29, 30; 82, 83) C- oder U-förmig oder winkelförmig ausgebildet und die Laufrollen (14 bis 25; 74 bis 77) so angeordnet sind, dass sie von wenigstens einem Ende der ersten Laufschienen (29, 30; 82, 83) her in diese einfahrbar oder aus diesen ausfahrbar sind.

4. Ladelift nach einem der Ansprüche 1 bis 3, **dadurch gekennzeichnet, dass** der Laufwagen (2, 62) und/oder die Ladevorrichtung (3, 63) mit zwei geraden, parallel angeordneten, zweiten Laufschienen (43, 44; 84, 85) und die Ladevorrichtung (3, 63) und/oder der Laufwagen (2, 62) mit an den zweiten Laufschienen (43, 44; 84, 85) abrollenden, weiteren Laufrollen (34, 35, 38, 39; 88, 89) versehen sind.

5. Ladelift nach Anspruch 4, **dadurch gekennzeichnet, dass** die zweiten Laufschienen (43, 44; 84, 85) C- oder U-förmig ausgebildet und die weiteren Laufrollen (34, 35, 38, 39; 88, 89) so angeordnet sind, dass sie von wenigstens einem Ende der zweiten Laufschienen (43, 44; 84, 85) her in diese einführbar oder aus diesen herausziehbar sind.

6. Ladelift nach einem der Ansprüche 1 bis 5, **dadurch gekennzeichnet, dass** ein erster Antrieb (48, 90) zur Verschiebung des Laufwagens (2, 62) relativ zum Haltegestell (1, 61) vorgesehen ist.

7. Ladelift nach Anspruch 6, **dadurch gekennzeichnet, dass** der erste Antrieb (48, 90) einen ersten Linearantrieb enthält, der zwischen einem Haltepunkt (50, 96) am Haltegestell (1, 61) und einem Haltepunkt (51, 97) am Laufwagen (2, 62) angeordnet und mit den Haltepunkten (50, 96; 51, 97) lösbar verbindbar ist.

8. Ladelift nach Anspruch 6 oder 7, **dadurch gekennzeichnet, dass** ein zweiter Antrieb (49, 91) zur Verschiebung der Ladevorrichtung (3, 63) relativ zum Laufwagen (2, 62) 5 vorgesehen ist.

9. Ladelift nach Anspruch 8, **dadurch gekennzeichnet, dass** der zweite Antrieb (49, 91) einen zweiten Linearantrieb enthält, der zwischen einem Haltepunkt (52, 98) am Laufwagen (2, 62) und einem Haltepunkt (53, 99) an der Ladevorrichtung (3, 63) angeordnet und mit diesen Haltepunkten (52, 98; 53, 99) lösbar verbindbar ist.

10. Ladelift nach einem der Ansprüche 1 bis 9, **dadurch gekennzeichnet, dass** die Ladevorrichtung (3, 63) einen verschiebbar am Laufwagen (2, 62) montierbaren Rahmen (63 bis 65; 84 bis 86) und ein senkrecht dazu vom Rahmen abstehendes Ladeelement (46, 87) aufweist.

11. Ladelift nach einem der Ansprüche 1 bis 10, **dadurch gekennzeichnet, dass** das Haltegestell (1, 61) an einem Ende mit einer zur Befestigung an einer Seiten-, Vorder-, Rückwand und/oder Bodenfläche der Ladefläche des Fahrzeugs und/oder an einer Wand und/oder einer Bodenfläche des Gebäudes oder an der Verkehrsmittelrampe und dgl. bestimmten Unterkonstruktion (8, 9; 68; 69) versehen ist.

12. Ladelift nach Anspruch 11, **dadurch gekennzeichnet, dass** die Unterkonstruktion (8, 9; 68, 69) mit wenigstens einem zur Befestigung am Fahrzeug und/oder im Gebäude oder an der Verkehrsmittelrampe und dgl. bestimmten Schnellverschluss (101) oder einem Mittel versehen ist, das mit einem am Fahrzeug und/oder im Gebäude oder an der Verkehrsmittelrampe und dgl. vorhandenen Schnellverschluss zusammenwirken kann.

13. Ladelift nach einem der Ansprüche 1 bis 12, **dadurch gekennzeichnet, dass** der Laufwagen (2, 62) wenigstens zwei, in der ersten Richtung teleskopartig ineinander gesteckte Bauteile enthält.

14. Ladelift nach einem der Ansprüche 10 bis 13, **gekennzeichnet durch** eine verschiebbar auf dem Ladeelement (46, 87) angebrachte Aufsatzplattform (120).

15. Fahrzeug, insbesondere Kraftfahrzeug mit einer Ladefläche (60a), **dadurch gekennzeichnet, dass** ein Ladelift nach wenigstens einem der Ansprüche 1 bis 14 auf der Ladefläche (60a) montiert ist.

## Claims

1. Loading lift for a vehicle, in particular for a motor vehicle and/or to overcome differences of level in a building, at a public transportation ramp and the like comprising a holding stand (1, 61) to be attached to the vehicle and/or to a wall area and/or to a ground area of the building, at the public transportation ramp and the like, a carriage (2, 62) which can be reciprocated in a first direction on the holding stand (1, 61) and a loading device (3, 63) which can be mounted on the carriage (2, 62) and can be reciprocated in a second direction substantially vertical to the first direction between a loading position and a transporting position, **characterized in that** the holding stand (1, 61), the carriage (2, 62) and the loading device (3, 63) each consist of a module, it being possible for these modules to be selectively handled individually or to be inserted one inside another and connected together to produce a ready-made constructional unit.

2. Loading lift according to claim 1, **characterized in that** the holding stand (1, 61) and/or the carriage (2, 62) is provided with two straight mutually parallel first roller rails (29, 30; 82, 83) and the carriage (2, 62) and/or the holding stand (1, 61) are provided with rollers (14 to 25; 74 to 77) which run on the first roller rails (29, 30; 82, 83).

3. Loading lift according to claim 2, **characterized in that** the first roller rails (29, 30; 82, 83) are configured to be C- or U-shaped or angular and the rollers (14 to 25; 74 to 77) are arranged such that they can be moved into or out of the first roller rails (29, 30; 82, 83) from at least one end of said first roller rails (29, 30; 82, 83).

4. Loading lift according to any one of claims 1 to 3, **characterized in that** the carriage (2, 62) and/or the loading device (3, 63) are provided with two straight second roller rails (43, 44; 84, 85) arranged in parallel and the loading device (3, 63) and/or the carriage (2, 62) are provided with further rollers (34, 35, 38, 39; 88, 89) which run on the second roller rails (43, 44; 84, 85).

5. Loading lift according to claim 4, **characterized in that** the second roller rails (43, 44; 84, 85) are configured to be C- or U-shaped and the further rollers (34, 35, 38, 39; 88, 89) are arranged such that they can be moved into or out of the second roller rails (43, 44; 84, 85) from at least one end of said second roller rails (43, 44; 84, 85).

6. Loading lift according to any one of claims 1 to 5, **characterized in that** a first drive (48, 90) is provided for moving the carriage (2, 62) relative to the holding stand (1, 61).

7. Loading lift according to claim 6, **characterized in that** the first drive (48, 90) comprises a first linear drive which is arranged between a hold point (50, 96) on the holding stand (1, 61) and a hold point (51, 97) on the carriage (2, 62) and can be detachably connected to the hold points (50, 96; 51, 97).

8. Loading lift according to claim 6 or 7, **characterized in that** a second drive (49, 91) is provided for moving the loading device (3, 63) relative to the carriage (2, 62).

9. Loading lift according to claim 8, **characterized in that** the second drive (49, 91) comprises a second linear drive which is arranged between a hold point (52, 98) on the carriage (2, 62) and a hold point (53, 99) on the loading device (3, 63) and can be detachably connected to these hold points (52, 98; 53, 99).

10. Loading lift according to any one of claims 1 to 9, **characterized in that** the loading device (3, 63) has a frame (63 to 65; 84 to 86) which can be mounted displaceably on the carriage (2, 62) and a loading element (46, 87) which projects perpendicularly thereto from the frame.

11. Loading lift according to any one of claims 1 to 10, **characterized in that** the holding stand (1, 61) is provided at one end with a substructure (8, 9; 68; 69) which is intended to be attached to a side wall, a front wall, a back wall and/or a ground area of the loading area of the vehicle and/or to a wall and/or to a ground area of the building or to the public transportation ramp and the like.

12. Loading lift according to claim 11, **characterized in that** the substructure (8, 9; 68; 69) is provided with at least one quick-acting closure (101) intended to be attached to the vehicle and/or to the building or to the public transportation ramp and the like or is provided with a means which can cooperate with a quick-acting closure present on the vehicle and/or in the building or on the public transportation ramp and the like.

13. Loading lift according to any one of claims 1 to 12, **characterized in that** the carriage (2, 62) comprises at least two components which are inserted telescopically one inside the other in the first direction.

14. Loading lift according to any one of claims 10 to 13, **characterized by** a top part platform (120) displaceably attached on the loading element (46, 87).

15. Vehicle, in particular motor vehicle having a loading area (60a), **characterized in that** a loading lift according to at least one of claims 1 to 14 is mounted on the loading area (60a).

## Revendications

1. Dispositif de levage de charge pour un véhicule, en particulier un véhicule à moteur et/ou pour la maîtrise de différences de hauteur dans un bâtiment, à une rampe de moyen de transport et analogue, avec un bâti de retenue (1, 61) à fixer au véhicule et/ou à une face de paroi et/ou de sol dans le bâtiment, à la rampe de moyen de transport et analogue, un chariot de roulement (2, 62) apte à effectuer un mouvement alternatif au bâti de retenue (1, 61) dans une première direction et un dispositif de charge (3, 63) apte à être monté sur le chariot de roulement (2, 62), qui est déplaçable selon un mouvement alternatif dans une deuxième direction, sensiblement perpendiculaire à la première direction entre une position de charge et une position de transport, **caractérisé en ce que** le bâti de retenue (1, 61), le chariot de roulement (2, 62) et le dispositif de charge (3, 63) sont constitués chacun d'un module, où ces modules peuvent être manipulés sélectivement individuellement ou, pour l'établissement d'une unité de construction prête à l'emploi, peuvent être emboîtés les uns dans les autres et reliés les uns aux autres.

2. Dispositif de levage de charge selon la revendication 1, **caractérisé en ce que** le bâti de retenue (1, 61) et/ou le chariot de roulement (2, 62) est pourvu de deux premiers rails de roulement droits, disposés parallèlement l'un à l'autre (29, 30; 82, 83), et le chariot de roulement (2, 62) et/ou le bâti de retenue (1, 61) de galets de roulement (14 à 25; 74 à 77), roulant sur les premiers rails de roulement (29, 30; 82, 83).

3. Dispositif de levage de charge selon la revendication 2, **caractérisé en ce que** les premiers rails de roulement (29, 30; 82, 83) sont réalisés en forme de C ou en forme de U ou en forme d'angle, et les galets de roulement (14 à 25; 74 à 77) sont disposés de telle sorte qu'ils peuvent être montés sur ceux-ci ou sortis de ceux-ci depuis au moins une extrémité des premiers rails de roulement (29, 30; 82, 83).

4. Dispositif de levage de charge selon l'une des revendications 1 à 3, **caractérisé en ce que** le chariot de roulement (2, 62) et/ou le dispositif de chargement (3, 63) sont munis de deux deuxièmes rails de roulement droits, disposés parallèlement (43, 44; 84, 85) et le dispositif de chargement (3, 63) et/ou le chariot de roulement (2, 62) sont munis d'autres galets de roulement (34, 35, 38, 39; 88, 89) roulant sur les deuxièmes rails de roulement (43, 44; 84, 85).

5. Dispositif de levage de charge selon la revendication 4, **caractérisé en ce que** les deuxièmes rails de roulement (43, 44; 84, 85) sont réalisés en forme de C ou de U et que les autres galets de roulement (34, 35, 38, 39; 88, 89) sont disposés de telle sorte qu'ils peuvent être montés sur ceux-ci ou sortis de ceux-ci depuis au moins une extrémité des deuxièmes rails de roulement (43, 44; 84, 85).

6. Dispositif de levage de charge selon l'une des revendications 1 à 5, **caractérisé en ce qu'**il est prévu un premier entraînement (48, 90) pour le déplacement du chariot de roulement (2, 62) relativement au bâti de retenue (1, 61).

7. Dispositif de levage de charge selon la revendication 6, **caractérisé en ce que** le premier entraînement (48, 90) contient un premier entraînement linéaire qui est disposé entre un point de retenue (50, 96) au bâti de retenue (1, 61) et un point de retenue (51, 97) au chariot de roulement (2, 62) et est relié amoviblement aux points de retenue (51, 96; 52, 97).

8. Dispositif de levage de charge selon la revendication 6 ou 7, **caractérisé en ce qu'**il est prévu un deuxième entraînement (49, 91) pour le déplacement du dispositif de chargement (3, 63) relativement au chariot de roulement (2, 62).

9. Dispositif de levage de charge selon la revendication 8, **caractérisé en ce que** le deuxième entraînement (49, 91) contient un deuxième entraînement linéaire qui est disposé entre un point de retenue (52, 98) au chariot de roulement (2, 62) et un point de retenue (53, 99) au dispositif de chargement (3, 63) et est relié amoviblement à ces points de retenue (52, 98; 53, 99).

10. Dispositif de levage de charge selon l'une des revendications 1 à 9, **caractérisé en ce que** le dispositif de chargement (3, 63) présente un châssis (63 à 65; 84 à 86) apte à être monté d'une manière déplaçable sur le chariot de roulement (2, 62) ainsi qu'un élément de chargement (46, 87) faisant saillie perpendiculairement à celui-ci du châssis.

11. Dispositif de levage de charge selon l'une des revendications 1 à 10, **caractérisé en ce que** le bâti de retenue (1, 61) est pourvu à une extrémité d'une sous-construction (8, 9; 68; 69) destinée à la fixation à une paroi latérale, avant, arrière et/ou face de fond de la face de chargement du véhicule et/ou à un mur et/ou une face de sol du bâtiment ou à la rampe de moyen de transport et analogue.

12. Dispositif de levage de charge selon la revendication 11, **caractérisé en ce que** la sous-construction (8, 9; 68, 69) est pourvue d'une fermeture rapide (101) ou d'un moyen prévu pour la fixation au véhicule et/ou dans le bâtiment ou à la rampe de moyen de transport et analogue, qui est apte à coopérer avec une fermeture rapide existant au véhicule et/ou dans le bâtiment ou à la rampe de moyen de transport et analogue.

13. Dispositif de levage de charge selon l'une des revendications 1 à 12, **caractérisé en ce que** le chariot de roulement (2, 62) contient au moins deux composants emboîtés télescopiquement dans la première direction.

14. Dispositif de levage de charge selon l'une des revendications 10 à 13, **caractérisé par** une plate-forme d'adaptation (120) montée d'une manière déplaçable sur l'élément de chargement (46, 87).

15. Véhicule, en particulier véhicule à moteur avec une face de chargement (60a), **caractérisé en ce qu'**un dispositif de levage de charge selon au moins l'une des revendications 1 à 14 est monté sur la face de chargement (60a).
